# EUROPÄISCHE PATENTSCHRIFT

(11) **EP 4 337 921 B1**
(45) Veröffentlichungstag und Bekanntmachung des Hinweises auf die Patenterteilung: **28.01.2026**
(21) Anmeldenummer: 23703008.5
(22) Anmeldetag: 31.01.2023
(51) Int. Cl.: G01F 1/66, G01F 1/74, G01F 15/10, G01F 15/02

(54) **DURCHFLUSSSENSOR ZUR BESTIMMUNG EINER DURCHFLUSSRATE EINES ENTLANG EINER STRÖMUNGSRICHTUNG STRÖMENDEN FLUIDES**
FLOW SENSOR FOR DETERMINING A FLOW RATE OF A FLUID FLOWING ALONG A FLOW DIRECTION
CAPTEUR DE DÉBIT POUR DÉTERMINER LE DÉBIT D'UN FLUIDE S'ÉCOULANT LE LONG D'UNE DIRECTION D'ÉCOULEMENT

(30) Priorität: 29.03.2022 DE 102022107386
(43) Veröffentlichungstag der Anmeldung: 20.03.2024
(73) Patentinhaber: Marquardt GmbH, 78604 Rietheim-Weilheim (DE)
(72) Erfinder: PANITZ, Mathias, 78044 Villingen-Schwenningen (DE)
(74) Vertreter: Staeger & Sperling Partnerschaftsgesellschaft mbB
(86) Internationale Anmeldenummer: PCT/EP2023/052269
(87) Internationale Veröffentlichungsnummer: WO 2023/186367

(56) Entgegenhaltungen:
- EP-A1- 2 369 305
- US-A1- 2013 259 083
- US-A1- 2021 349 484

## Beschreibung

### Beschreibung:

Die Erfindung betrifft einen Durchflusssensor zur Bestimmung einer Durchflussrate eines entlang einer Strömungsrichtung strömenden Fluides sowie ein Verfahren zur Bestimmung einer Durchflussrate eines entlang einer Strömungsrichtung strömenden Fluides.

Aus dem Stand der Technik ist eine Vielzahl von Durchflusssensoren bzw. Durchflussmessern bekannt.

Durchflusssensoren, welche auf einem Ultraschallmessprinzip basieren, wie es beispielsweise durch die DE 10 2019 009 033 A1 erläutert ist, haben dabei zumeist das Problem, dass die Durchflussrate nur für genau ein bestimmtes Fluid bzw. ein bestimmtes und vorbekanntes Gemisch exakt ermittelt werden kann.

Solche Sensoren sehen meist vor, dass entlang einer zu der Strömungsrichtung des Fluides schräg stehenden Messstrecke zwei Schalllaufzeiten in entgegengesetzte Richtungen ermittelt, deren Differenz als Differenzlaufzeit bestimmt und basierend auf der Differenzlaufzeit die Durchflussrate beispielsweise aus einer Tabelle ermittelt wird. Die Tabelle ist jedoch auf exakt ein Mischungsverhältnis bzw. ein vorbekanntes Gemisch als Fluid eingeschränkt.

Die Fluide bestehen dabei oftmals aus Wasser und einem Frostschutzmittel, wie beispielsweise Glykol, wobei sich das Mischungsverhältnis abhängig von der Anwendung und auch abhängig von äußeren Faktoren ändern kann. Ändert sich die Zusammensetzung bzw. das Gemisch, sind die durch die Tabelle wiedergegebenen Zusammenhänge nicht mehr korrekt, sodass eine fehlerhafte Durchflussrate ermittelt wird. Je stärker das tatsächliche Gemisch von dem in der Tabelle angenommenen Gemisch abweicht, desto größer ist der Messfehler.

Der Ultraschall-Durchflusssensor gemäß der EP 2 641 071 B1 sieht zur Korrektur der separat bestimmten Durchflussrate zusätzliche physikalische Korrekturglieder, beispielsweise den Wärmefluss, vor, wodurch der Durchflusssensor jedoch vergleichsweise teuer ist.

EP 2 369 305 A1 offenbart ein Ultraschall-Durchflussmessgerät und ein entsprechendes Verfahren für eine Flüssigkeit, die mehrere Komponenten aufweist. Ein Algorithmus greift auf eine hinterlegte Beziehung zwischen dem Mischungsverhältnis, der Schallgeschwindigkeit und der Flüssigkeitstemperatur zu und bestimmt das Mischungsverhältnis.

Der Erfindung liegt deshalb die Aufgabe zugrunde, die vorgenannten Nachteile zu überwinden und einen kostengünstigen Durchflusssensor bereitzustellen, welcher die Durchflussrate abhängig von dem Mischungsverhältnis des Gemisches ermittelt kann.

Diese Aufgabe wird durch die Merkmalskombination gemäß Patentanspruch 1 und Patentanspruch 8 gelöst.

Erfindungsgemäß wird daher ein Durchflusssensor zur Bestimmung einer Durchflussrate eines entlang einer Strömungsrichtung strömenden Fluides und insbesondere den Durchflusssensor durchströmenden Fluides vorgeschlagen. Das Fluid ist ein gemäß einem Mischungsverhältnis gemischtes Gemisch, welches vorzugsweise aus im Wesentlichen zwei (Haupt-) Komponenten besteht. Insbesondere kann das Gemisch Wasser und ein Frostschutzmittel, wie Glykol, als Komponenten aufweisen. Vorliegend ist Gemisch auch dahingehend zu verstehen, dass dieses auch aus 100% einer Komponente und insbesondere Wasser bestehen kann. Das Fluid besteht entsprechend vorzugsweise zwischen 50% und 100% aus Wasser, sodass der Anteil an Frostschutzmittel bzw. Glykol 0% bis 50% betragen kann. Ein solches Gemisch bzw. Fluid kann zu einem vorzugsweise geringen Anteil jedoch auch weitere Komponenten bzw. Verunreinigungen enthalten. Der vorgeschlagene Durchflusssensor weist ein Temperaturmodul zur Messung einer Temperatur des Fluides, ein erstes Ultraschallmodul, ein zweites Ultraschallmodul sowie ein Auswertemodul auf. Das Auswertemodul kann dabei auch als Auswerteeinheit oder Auswerteelektronik verstanden werden. Zwischen dem ersten Ultraschallmodul und dem zweiten Ultraschallmodul ist eine durch das Fluid verlaufende Messstrecke aufgespannt, welche zumindest anteilig in Strömungsrichtung d.h. schräg zu dieser verläuft. Vorzugsweise ist das erste Ultraschallmodul daher bezogen auf die Strömungsrichtung stromauf dem zweiten Ultraschallmodul angeordnet. Das erste Ultraschallmodul und das zweite Ultraschallmodul sind ausgebildet, eine erste Schalllaufzeit entlang der Messstrecke von dem ersten Ultraschallmodul zu dem zweiten Ultraschallmodul und eine zweite Schalllaufzeit entlang der Messstrecke von dem zweiten Ultraschallmodul zu dem ersten Ultraschallmodul zu bestimmen. Weiter ist das Auswertemodul ausgebildet, aus der Temperatur, der ersten Schalllaufzeit und der zweiten Schalllaufzeit das Mischungsverhältnis des Fluides zu bestimmen. Ausgehend von dem nun bekannten Mischungsverhältnis ist das Auswertemodul ferner ausgebildet, aus dem Mischungsverhältnis, der Temperatur, der ersten Schalllaufzeit und der zweiten Schalllaufzeit die Durchflussrate zu bestimmen.

Die erste Schalllaufzeit kann dadurch bestimmt werden, dass das erste Ultraschallmodul ein erstes Ultraschallsignal in eine erste Richtung entlang der Messstrecke erzeugt und dessen Laufzeit von dem ersten Ultraschallmodul zu dem zweiten Ultraschallmodul gemessen wird. Analog kann die zweite Schalllaufzeit dadurch bestimmt werden, dass das zweite Ultraschallmodul ein zweites Ultraschallsignal in einer zweiten, zu der ersten Richtung entgegengesetzten Richtung erzeugt und dessen Laufzeit von dem zweiten Ultraschallmodul zu dem ersten Ultraschallmodul gemessen wird.

Die Messung der Laufzeit kann dabei gemeinsam durch das erste und zweite Ultraschallmodul oder auch durch das Auswertemodul erfolgen. Hierzu können die Ultraschallmodule unmittelbar miteinander und/oder zumindest eines der Ultraschallmodule mit dem Auswertemodul einen Datenaustausch ermöglichend verbunden sein.

Aus der ersten und zweiten Laufzeit sowie aus der Temperatur wird dann das Mischungsverhältnis und daraus zusammen mit den Laufzeiten die Durchflussrate bestimmt.

Der Grundgedanke der Erfindung kann also dadurch zusammengefasst werden, dass das Gemisch und die Durchflussrate des Gemisches bzw. des Fluides mittelbar d.h. implizit durch die drei in einem Zusammenhang stehenden Messgrößen (erste Laufzeit, zweite Laufzeit, Temperatur) bestimmt werden, wobei deren Zusammenhänge in dem Auswertemodul beispielsweise durch ein Modell, eine Formel, einen oder mehrere Graphen oder tabellarisch hinterlegt sind.

Bei einer tabellarischen Hinterlegung bzw. bei einer Hinterlegung als ein oder mehrere Graphen können die dort gespeicherten Zusammenhänge durch zuvor durchgeführte Messreihen und/oder Versuche ermittelt worden sein.

Als Durchflussrate wird vorzugsweise der Volumenstrom durch den Durchflusssensor verstanden, sodass bei der Bestimmung insbesondere auch ein von dem Durchflusssensor bereitgestellter und von dem Fluid durchströmter Strömungsquerschnitt berücksichtigt werden kann.

Das Auswertemodul ist erfindungsgemäß ausgebildet, eine Summenlaufzeit als Summe der ersten Schalllaufzeit und der zweiten Schalllaufzeit zu bestimmen.

Weiter ist vorgesehen, dass in dem Auswertemodul ein tabellarischer Zusammenhang von Mischungsverhältnis, der Temperatur, der ersten Schalllaufzeit und der zweiten Schalllaufzeit gespeichert ist. Ein solcher Zusammenhang ist unmittelbar als Zusammenhang von Mischungsverhältnis, Temperatur und Summenlaufzeit hinterlegt, sodass mit einer zuvor ermittelten Summenlaufzeit und der Temperatur des Fluides das Mischungsverhältnis ermittelbar ist. Vorzugsweise bezieht sich ein solcher Zusammenhang auf eine Kombination zweier Komponenten. Beispielsweise also auf den Zusammenhang bei einem Gemisch aus Wasser und Glykol. Weiter können in dem Auswertemodul auch zusätzliche bzw. weitere Zusammenhänge für andere Gemische gespeichert sein, sodass beispielsweise bei Inbetriebnahme einstellbar ist, aus welchen (Haupt-) Komponenten das den Durchflusssensor durchströmende Gemisch gebildet ist.

Gemäß der Erfindung ist in dem Auswertemodul eine erste Tabelle bzw. Matrix als ein solcher Zusammenhang hinterlegt, in welcher eine Vielzahl von Mischungsverhältnissen in Abhängigkeit der Temperatur und der Summenlaufzeit gespeichert sind und aus welcher das Mischungsverhältnis des Gemisches bestimmbar und/oder interpolierbar ist. Bezogen auf die Tabelle können also in dem Auswertemodul mehrere Tabellen gespeichert sein, wobei beispielsweise bei Inbetriebnahme auswählbar ist, anhand welcher Tabelle das Mischungsverhältnis bestimmt werden soll.

Wurde die Summenlaufzeit und die Temperatur ermittelt, kann also ein Mischungsverhältnis aus der Tabelle bestimmt werden. Dabei müssen nicht zwingend für jede mögliche Summenlaufzeit oder für jede mögliche Temperatur Mischungsverhältnisse hinterlegt sein. Vielmehr kann das Auswertemodul ausgebildet sein, aus den hinterlegten Werten Zwischenwerte zu berechnen d.h. ein Mischungsverhältnis aus den bekannten Werten zu interpolieren.

Für eine solche Tabelle sind die Komponenten des Fluides vorzugsweise bekannt und vorbestimmt. Die erste Tabelle berücksichtigt also vorzugsweise die Abhängigkeiten bzw. Zusammenhänge für ein Gemisch aus Wasser und einem Frostschutzmittel, wie z.B. Glykol.

Weiter ist das Auswertemodul ausgebildet, eine Differenzlaufzeit als Differenz der ersten Schalllaufzeit und der zweiten Schalllaufzeit zu bestimmen. Dabei ist vorzugsweise vorgesehen, die kleinere der Schalllaufzeiten von der größeren Schalllaufzeit zu subtrahieren. Ist das erste Ultraschallmodul entlang der Strömungsrichtung bzw. entlang der durch das Fluid bestimmten Strömung stromauf des zweiten Ultraschallmoduls angeordnet, wird die Differenzlaufzeit also durch Subtraktion der ersten Schalllaufzeit von der zweiten Schalllaufzeit bestimmt. Unabhängig davon, welche der Schalllaufzeiten von der jeweils anderen abgezogen wird, kann auch einfach der Betrag gebildet werden.

In dem Auswertemodul ist zudem ein tabellarischer Zusammenhang von Mischungsverhältnis, der Temperatur, der ersten Schalllaufzeit, der zweiten Schalllaufzeit und der Durchflussrate gespeichert. Ein solcher Zusammenhang ist unmittelbar als Zusammenhang von Mischungsverhältnis, Temperatur und Differenzlaufzeit hinterlegt, sodass mit einem zuvor ermittelten Mischungsverhältnis, der Temperatur und der Differenzlaufzeit die Durchflussrate ermittelbar ist. Da die Durchflussrate für verschiedene Mischungsverhältnisse ermittelt werden kann, können in dem Auswertemodul auch eine Vielzahl von Zusammenhängen gespeichert sein, welche jeweils für ein Mischungsverhältnis gelten.

Erfindungsgemäß ist in dem Auswertemodul zumindest eine zweite Tabelle bzw. Matrix hinterlegt, in welcher eine Vielzahl von Durchflussraten in Abhängigkeit des Mischungsverhältnisses, der Temperatur und der Differenzlaufzeit gespeichert sind und aus welcher die Durchflussrate bestimmbar und/oder interpolierbar ist. Die Durchflussrate entspricht dabei insbesondere dem Volumenstrom des Fluides durch den Durchflusssensor und kann beispielsweise in l/h angegeben werden. Vorzugsweise sind eine Vielzahl von Tabellen gespeichert, aus welchen die Durchflussrate für verschiedene Mischungsverhältnisse ermittelbar ist.

In dem Auswertemodul kann ferner ein Korrekturwert hinterlegt sein, welcher beispielsweise bei Inbetriebnahme des Durchflusssensors ermittelt werden kann und eine Abweichung einer durch die zweite Tabelle ermittelten Durchflussrate von einer tatsächlichen Durchflussrate angibt. Durch den Korrekturwert sollen insbesondere durch die Fertigung bedingte Bauteiltoleranzen kompensiert werden, sodass der Korrekturwert bauteilspezifisch ist und bei der Fertigung oder der Inbetriebnahme sowie gegebenenfalls in Intervallen während des Betriebs ermittelt werden kann. Entsprechend ist das Auswertemodul in einer vorteilhaften Weiterbildung ausgebildet, eine aus der zweiten Tabelle ermittelte Durchflussrate mit dem Korrekturwert zu beaufschlagen, um dadurch aus einer aus der zweiten Tabelle bestimmten (theoretischen) Durchflussrate eine tatsächliche Durchflussrate zu bestimmen.

Der Durchflusssensor bzw. dessen Auswertemodul kann zudem ausgebildet sein, die Bestimmung des Mischungsverhältnisses in vorbestimmten und vorzugsweise regelmäßigen Intervallen zu wiederholen, um Änderungen des Mischungsverhältnisses erkennen und bei der Bestimmung der Durchflussrate berücksichtigen zu können.

Ein weiterer Aspekt der Erfindung betrifft ein Verfahren zur Bestimmung einer Durchflussrate eines entlang einer Strömungsrichtung strömenden Fluides durch einen Strömungsquerschnitt. Das Verfahren kann dabei insbesondere in bzw. durch den erfindungsgemäßen Durchflusssensor durchgeführt werden, welcher hierfür entsprechend ausgebildet sein kann. Wie bereits bezüglich des Durchflusssensors festgestellt, ist das Fluid ein gemäß einem Mischungsverhältnis gemischtes Gemisch, welches vorzugsweise aus im Wesentlichen zwei (Haupt-) Komponenten besteht. Insbesondere kann das Gemisch Wasser und ein Frostschutzmittel, wie Glykol, als (Haupt-) Komponenten aufweisen. Vorliegend ist Gemisch auch dahingehend zu verstehen, dass dieses auch aus 100% einer Komponente und insbesondere Wasser bestehen kann. Das Fluid besteht vorzugsweise zwischen 50% und 100% aus Wasser, sodass der Anteil an Frostschutzmittel bzw. Glykol 0% bis 50% betragen kann. Ein solches Gemisch bzw. Fluid kann zu einem vorzugsweise geringen Anteil jedoch auch weitere Komponenten bzw. Verunreinigungen enthalten. Gemäß dem Verfahren ist vorgesehen, dass die Temperatur des Fluides bestimmt wird, eine erste Schalllaufzeit in eine erste Richtung entlang einer durch das Fluid und zumindest abschnittsweise in Strömungsrichtung verlaufenden Messstrecke und eine zweite Schalllaufzeit in eine zweite entgegengesetzte Richtung entlang der Messstrecke bestimmt wird. Anschließend wird aus der Temperatur, der ersten Schalllaufzeit und der zweiten Schalllaufzeit das Mischungsverhältnis ermittelt. Wurde das Mischungsverhältnis bestimmt, wird die Durchflussrate aus dem Mischungsverhältnis, der Temperatur, der ersten Schalllaufzeit und der zweiten Schalllaufzeit ermittelt.

Für die Bestimmung des Mischungsverhältnisses wird die Summe der ersten Schalllaufzeit und der zweiten Schalllaufzeit als Summenlaufzeit und anschließend dann das Mischungsverhältnis aus der Temperatur und der Summenlaufzeit bestimmt. Hierfür ist eine erste Tabelle vorgesehen, aus welcher das Mischungsverhältnis für ein aus zwei vorzugsweise bekannten Komponenten gemischtes Gemisch abhängig von der Summenlaufzeit und der Temperatur bestimmbar ist.

Weiter wird für die Bestimmung der Durchflussrate die Differenz der ersten Schalllaufzeit und der zweiten Schalllaufzeit als Differenzlaufzeit und anschließend dann die Durchflussrate aus dem Mischungsverhältnis, der Temperatur und der Differenzlaufzeit bestimmt. Hierfür ist eine zweite Tabelle vorgesehen, aus welcher die Durchflussrate in Abhängigkeit der Differenzlaufzeit und der Temperatur für das zuvor bestimmte Mischungsverhältnis bestimmbar ist.

Die in der Tabelle hinterlegten Werte können dabei insbesondere die durch die Differenzlaufzeit bestimmte Strömungsgeschwindigkeit des Fluides und die durch Temperatur und Mischungsverhältnis bestimmte Dichte des Fluides sowie den von dem Fluid durchströmten Strömungsdurchmesser des Durchflusssensors berücksichtigen.

Zur Bestimmung des Mischungsverhältnisses ist vorgesehen, dass dieses aus der ersten Tabelle ausgelesen wird. Alternativ kann auch das für die nächstliegenden Werte (Temperatur, Summenlaufzeit) hinterlegte Mischungsverhältnis verwendet werden. Weiter können auch mehrere Mischungsverhältnisse für mehrere nächstliegende Werte ermittelt und das Mischungsverhältnis für die tatsächlichen Werte interpoliert oder extrapoliert werden.

Gleiches gilt analog für die Bestimmung der Durchflussrate durch den hierfür hinterlegten Zusammenhang bzw. die zweite Tabelle.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: schematischer Aufbau eines Durchflusssensors;
- Fig. 2: schematischer Ablauf der Ermittlung der Durchflussrate durch das Auswertemodul.

Die Figuren sind beispielhaft schematisch. Gleiche Bezugszeichen in den Figuren weisen auf gleiche funktionale und/oder strukturelle Merkmale hin.

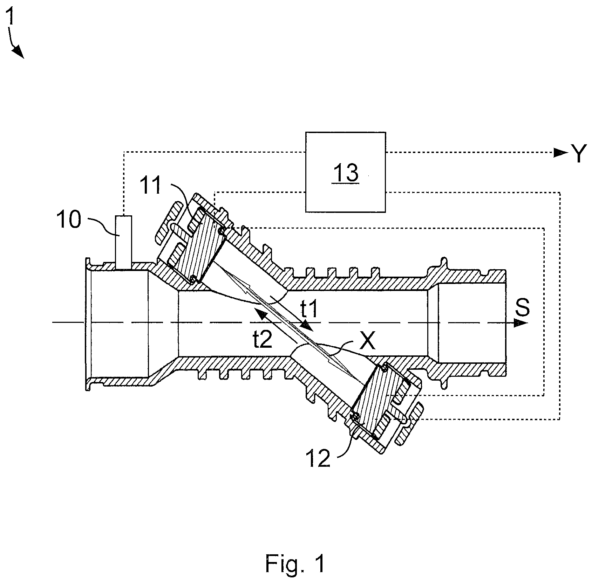

Der in Figur 1 dargestellte Durchflusssensor 1 verfügt über einen Temperatursensor bzw. Temperaturmodul 10 zur Ermittlung der Temperatur T des den Durchflusssensor 1 in Strömungsrichtung S durchströmenden Fluides. Weiter sind zwei Ultraschallmodule 11, 12 vorgesehen, welche zwischen sich eine Messstrecke X aufspannen, die das Fluid schräg zu der Strömungsrichtung S durchläuft, sodass sich also die Messstrecke X anteilig entlang der Strömungsrichtung S erstreckt. Das erste Ultraschallmodul 11 ist bezogen auf die Strömungsrichtung S entsprechend stromauf dem zweiten Ultraschallmodul 12 bzw. das zweite Ultraschallmodul 12 stromab dem ersten Ultraschallmodul 11 angeordnet.

Auch bereits in üblichen auf dem Ultraschallmessprinzip basierenden Durchflusssensoren sind solche Ultraschalmodule vorgesehen, durch welche die Schalllaufzeiten eines Ultraschallsignals in beide Richtungen der Messstrecke X ermittelt werden können. Ausgehend von den so ermittelten Schalllaufzeiten ist jedoch die Durchflussrate nicht exakt bestimmbar, wenn das den Durchflusssensor 1 durchströmende Gemisch nicht bekannt ist oder sich ändert.

Daher wird vorgeschlagen, dass der Durchflusssensor 1 ein Auswertemodul 13 aufweist, welches ausgebildet ist, ein Mischungsverhältnis des den Durchflusssensor 1 durchströmenden Fluides bzw. Gemisches zu ermitteln und darauf basierend die Durchflussrate zu bestimmen.

Hierzu ist das Auswertemodul 13 einen Datenaustausch ermöglichend mit dem Temperatursensor 10 und zumindest einem der Ultraschallmodule 11, 12 verbunden. Bei der in Figur 1 dargestellten Variante, ist das Auswertemodul 13 mit beiden Ultraschallmodulen 11, 12 verbunden, wobei eine Datenverbindung zwischen den Ultraschallmodulen 11, 12 nur zwingend notwendig ist, wenn diese nicht beide mit dem Auswertemodul 13 verbunden sind.

Das erste Ultraschallmodul 11 und das zweite Ultraschallmodul 12 sind gemeinsam ausgebildet, je einen Ultraschallimpuls bzw. ein Ultraschallsignal in beide Richtungen entlang der Messstrecke X zu generieren und die erste Schalllaufzeit t1 des Ultraschallsignals in eine erste Richtung von dem ersten Ultraschallmodul 11 zu dem zweiten Ultraschallmodul 12 sowie die zweite Schalllaufzeit t2 des Ultraschallsignals in eine zweite Richtung von dem zweiten Ultraschallmodul 12 zu dem ersten Ultraschallmodul 11 zu messen.

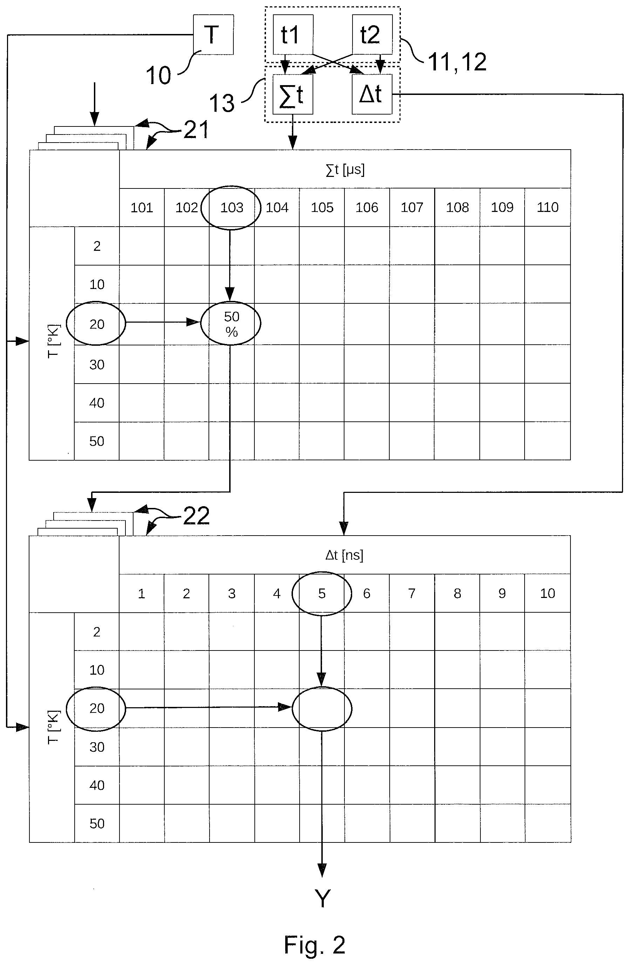

Weiter ist das Auswertemodul 13 ausgebildet, anhand der Temperatur T und der ersten Schalllaufzeit t1 sowie der zweiten Schalllaufzeit t2 das Mischungsverhältnis des Fluides bzw. des Gemisches und die Durchflussrate zu bestimmen, wie es in Figur 2 schematisch abgebildet ist.

Dazu ist in dem Auswertemodul 13 zumindest eine erste Tabelle 21 gespeichert, welche für eine Vielzahl von Paaren aus Summenlaufzeit Σt und Temperatur T ein Mischungsverhältnis des Fluides angibt. Die erste Tabelle 21 bezieht sich dann auf ein Gemisch aus zwei bekannten Komponenten und insbesondere auf ein Gemisch aus Wasser und Glykol. In dem Auswertemodul 13 können auch mehrere erste Tabellen 21 für jeweils ein Gemisch aus zwei Komponenten gespeichert sein, wobei dann insbesondere bei der Inbetriebnahme des Durchflusssensors 1 eingestellt wird, welche erste Tabelle 21 verwendet wird bzw. aus welchen Komponenten das Gemisch besteht.

Das Auswertemodul 13 bildet dann die Summenlaufzeit Σt als Summe der ersten Schalllaufzeit t1 und der zweiten Schalllaufzeit t2. Anschließend wird für das Wertepaar aus Temperatur T und Summenlaufzeit Σt das Mischungsverhältnis bestimmt. In Figur 2 ist beispielhaft ein Anteil von 50% Glykol in dem Gemisch dargestellt, so dass das Mischungsverhältnis von Wasser und Glykol 50/50 ist.

Obgleich als Tabelle dargestellt, kann der Zusammenhang von Temperatur T und Summenlaufzeit Σt zur Ermittlung des Mischungsverhältnisses auch beispielsweise als Formel, Matrix, zweidimensionaler oder dreidimensionaler Graph hinterlegt sein.

Weiter müssen in dem Auswertemodul 13 auch nicht für jedes mögliche Wertepaar Mischungsverhältnisse angegeben sein. Vielmehr kann ein Mischungsverhältnis eines Wertepaares aus den Mischungsverhältnissen benachbarter und in der ersten Tabelle 21 hinterlegten Wertepaaren interpoliert oder extrapoliert werden.

Ausgehend von dem ermittelten Mischungsverhältnis wird dann eine in dem Auswertemodul 13 hinterlegte zweite Tabelle 22 aus einer Vielzahl von zweiten Tabellen 22 ermittelt, welche die Durchflussraten Y bezogen auf das ermittelte Mischungsverhältnis beschreiben.

Auch die in den zweiten Tabellen 22 beschriebenen Zusammenhänge müssen nicht tabellarisch hinterlegt sein, sondern können ebenfalls als Formel, Matrix, zweidimensionaler oder dreidimensionaler Graph in dem Auswertemodul 13 gespeichert sein.

Das Auswertemodul 13 ist hierfür ausgebildet, die Differenzlaufzeit Δt aus der Differenz der ersten Schalllaufzeit t1 und der zweiten Schalllaufzeit t2 zu bestimmen. Anschließend kann aus dem Wertepaar von Temperatur T und der Differenzlaufzeit Δt die Durchflussrate Y, beispielsweise in l/h ermittelt werden.

Allgemein ist festzustellen, dass aus der Differenzlaufzeit Δt durch das Auswertemodul 13 auf die Strömungsgeschwindigkeit des Fluides durch den Durchflusssensor 1 geschlossen werden kann. Weiter kann durch die Temperatur T in dem Auswertemodul 13 und das Mischungsverhältnis die Dichte des Fluides bestimmt und zusammen mit einem in dem Auswertemodul 13 gespeicherten Strömungsdurchmesser das Volumen des Fluides bestimmt werden, welches den Durchflusssensor 1 in einer vorbestimmten Zeit durchströmt. Diese Zusammenhänge können in der zweiten Tabelle 22 enthalten sein und dadurch berücksichtigt werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Durchflusssensor (1) zur Bestimmung einer Durchflussrate (Y) eines entlang einer Strömungsrichtung (S) strömenden Fluides, welches ein gemäß einem Mischungsverhältnis gemischtes Gemisch ist,
wobei der Durchflusssensor (1) ein Temperaturmodul (10) zur Messung einer Temperatur (T) des Fluides, ein erstes Ultraschallmodul (11), ein zweites Ultraschallmodul (12) und ein Auswertemodul (13) aufweist,
wobei zwischen dem ersten Ultraschallmodul (11) und dem zweiten Ultraschallmodul (12) eine durch das Fluid verlaufende Messstrecke (X) aufgespannt ist, welche zumindest anteilig in Strömungsrichtung (S) verläuft,
wobei das erste Ultraschallmodul (11) und das zweite Ultraschallmodul (12) ausgebildet sind, eine erste Schalllaufzeit (t1) entlang der Messstrecke (X) von dem ersten Ultraschallmodul (11) zu dem zweiten Ultraschallmodul (12) und eine zweite Schalllaufzeit (t2) entlang der Messstrecke (X) von dem zweiten Ultraschallmodul (12) zu dem ersten Ultraschallmodul (11) zu bestimmen,
wobei das Auswertemodul (13) ausgebildet ist, aus der Temperatur (T), der ersten Schalllaufzeit (t1) und der zweiten Schalllaufzeit (t2) das Mischungsverhältnis des Fluides zu bestimmen,
wobei das Auswertemodul (13) ferner ausgebildet ist, aus dem Mischungsverhältnis, der Temperatur (T), der ersten Schalllaufzeit (t1) und der zweiten Schalllaufzeit (t2) die Durchflussrate (Y) zu bestimmen
wobei das Auswertemodul (13) ausgebildet ist, eine Summenlaufzeit (Σt) als Summe der ersten Schalllaufzeit (t1) und der zweiten Schalllaufzeit (t2) sowie eine Differenzlaufzeit (Δt) als Differenz der ersten Schalllaufzeit (t1) und der zweiten Schalllaufzeit (t2) zu bestimmen,
**dadurch gekennzeichnet, dass**
in dem Auswertemodul eine erste Tabelle (21) hinterlegt ist, in welcher eine Vielzahl von Mischungsverhältnissen in Abhängigkeit der Temperatur (T) und der Summenlaufzeit (Σt) gespeichert sind und aus welcher das Mischungsverhältnis bestimmbar und/oder interpolierbar ist,
und in dem Auswertemodul (13) eine zweite Tabelle (22) hinterlegt ist, in welcher eine Vielzahl von Durchflussraten (Y) in Abhängigkeit des Mischungsverhältnisses, der Temperatur (T) und der Differenzlaufzeit (Δt) gespeichert sind und aus welcher die Durchflussrate (Y) bestimmbar und/oder interpolierbar ist.

2. Verfahren zur Bestimmung einer Durchflussrate (Y) eines entlang einer Strömungsrichtung (S) strömenden Fluides, welches ein gemäß einem Mischungsverhältnis gemischtes Gemisch ist,
wobei eine Temperatur (T) des Fluides bestimmt wird,
wobei eine erste Schalllaufzeit (t1) in eine erste Richtung entlang einer durch das Fluid und zumindest abschnittsweise in Strömungsrichtung (S) verlaufenden Messstrecke (X) und eine zweite Schalllaufzeit (t2) in eine zweite entgegengesetzte Richtung entlang der Messstrecke (X) bestimmt wird,
**dadurch gekennzeichnet, dass**
die Summe der ersten Schalllaufzeit (t1) und der zweiten Schalllaufzeit (t2) als Summenlaufzeit (Σt) bestimmt und das Mischungsverhältnis aus der Temperatur (T) und der Summenlaufzeit (Σt) mittels einer ersten Tabelle (21) ermittelt wird,
die Differenz der ersten Schalllaufzeit (t1) und der zweiten Schalllaufzeit (t2) als Differenzlaufzeit (Δt) bestimmt und die Durchflussrate (Y) aus dem Mischungsverhältnis, der Temperatur (T) und der Differenzlaufzeit (Δt) mittels einer zweiten Tabelle (22) ermittelt wird.

## Claims

1. A flow sensor (1) for determining a flow rate (Y) of a fluid flowing along a flow direction (S) which is a mixture mixed according to a mixing ratio,
wherein the flow sensor (1) comprises a temperature module (10) for measuring a temperature (T) of the fluid, a first ultrasonic module (11), a second ultrasonic module (12), and an evaluation module (13),
wherein a measuring section (X) which extends at least partially in the flow direction (S) and through the fluid is spanned between the first ultrasonic module (11) and the second ultrasonic module (12),
wherein the first ultrasonic module (11) and the second ultrasonic module (12) are designed to determine a first acoustic travel time (t1) along the measuring path (X) from the first ultrasonic module (11) to the second ultrasonic module (12) and a second acoustic travel time (t2) along the measuring path (X) from the second ultrasonic module (12) to the first ultrasonic module (11),
wherein the evaluation module (13) is designed to determine the mixing ratio of the fluid from the temperature (T), the first acoustic travel time (t1), and the second acoustic travel time (t2),
wherein the evaluation module (13) is further designed to determine the flow rate (Y) from the mixing ratio, the temperature (T), the first acoustic travel time (t1), and the second acoustic travel time (t2),
wherein the evaluation module (13) is designed to determine a total travel time (Σt) as the sum of the first acoustic travel time (t1) and the second acoustic travel time (t2) as well as a differential travel time (Δt) as the difference between the first acoustic travel time (t1) and the second acoustic travel time (t2),
**characterised in that**
a first table (21) is stored in the evaluation module in which a multiplicity of mixing ratios as a function of the temperature (T) and the total travel time (Σt) are stored and from which the mixing ratio can be determined and/or interpolated,
and a second table (22) is stored in the evaluation module (13) in which a multiplicity of flow rates (Y) as a function of the mixing ratio, the temperature (T), and the differential travel time (Δt) are stored and from which the flow rate (Y) can be determined and/or interpolated.

2. A method for determining a flow rate (Y) of a fluid flowing along a flow direction (S) which is a mixture mixed according to a mixing ratio,
wherein a temperature (T) of the fluid is determined,
wherein a first acoustic travel time (t1) is determined in a first direction along a measuring section (X) which extends through the fluid and at least partially in the flow direction (S) and a second acoustic travel time (t2) is determined in a second, opposite direction along the measuring section (X),
**characterised in that**
the sum of the first acoustic travel time (t1) and the second acoustic travel time (t2) is determined as the total travel time (Σt), and the mixing ratio is determined from the temperature (T) and the total travel time (Σt) using a first table (21), and
the difference between the first acoustic travel time (t1) and the second acoustic travel time (t2) is determined as the differential travel time (Δt), and the flow rate (Y) is determined from the mixing ratio, the temperature (T), and the differential travel time (Δt) using a second table (22).

## Revendications

1. Capteur de débit (1) pour déterminer un débit (Y) d'un fluide s'écoulant le long d'une direction d'écoulement (S), lequel est un mélange mélangé selon un rapport de mélange,
dans lequel le capteur de débit (1) présente un module de température (10) pour mesurer une température (T) du fluide, un premier module ultrasonore (11), un deuxième module ultrasonore (12) et un module d'évaluation (13),
dans lequel entre le premier module ultrasonore (11) et le deuxième module ultrasonore (12), un trajet de mesure (X) traversant le fluide est établi, lequel s'étend au moins partiellement dans la direction d'écoulement (S),
dans lequel le premier module ultrasonore (11) et le deuxième module ultrasonore (12) sont conçus pour déterminer un premier temps de vol du son (t1) le long du trajet de mesure (X) du premier module ultrasonore (11) vers le deuxième module ultrasonore (12) et un deuxième temps de vol du son (t2) le long du trajet de mesure (X) du deuxième module ultrasonore (12) vers le premier module ultrasonore (11), dans lequel le module d'évaluation (13) est conçu pour déterminer le rapport de mélange du fluide à partir de la température (T), du premier temps de vol du son (t1) et du deuxième temps de vol du son (t2),
dans lequel le module d'évaluation (13) est en outre conçu pour déterminer le débit (Y) à partir du rapport de mélange, de la température (T), du premier temps de vol du son (t1) et du deuxième temps de vol du son (t2),
dans lequel le module d'évaluation (13) est conçu pour déterminer un temps de vol total (Σt) comme somme du premier temps de vol du son (t1) et du deuxième temps de vol du son (t2) ainsi qu'un temps de vol différentiel (Δt) comme différence du premier temps de vol du son (t1) et du deuxième temps de vol du son (t2), **caractérisé en ce que**
dans le module d'évaluation est stockée une première table (21), dans laquelle une pluralité de rapports de mélange sont enregistrés en fonction de la température (T) et du temps de vol total (Σt) et à partir de laquelle le rapport de mélange est déterminable et/ou interpolable,
et dans le module d'évaluation (13) est stockée une deuxième table (22), dans laquelle une pluralité de débits (Y) sont enregistrés en fonction du rapport de mélange, de la température (T) et du temps de vol différentiel (Δt) et à partir de laquelle le débit (Y) est déterminable et/ou interpolable.

2. Procédé pour déterminer un débit (Y) d'un fluide s'écoulant le long d'une direction d'écoulement (S), lequel est un mélange mélangé selon un rapport de mélange, dans lequel une température (T) du fluide est déterminée,
dans lequel un premier temps de vol du son (t1) dans une première direction le long d'un trajet de mesure (X) traversant le fluide et s'étendant au moins par sections dans la direction d'écoulement (S) et un deuxième temps de vol du son (t2) dans une deuxième direction opposée le long du trajet de mesure (X) sont déterminés, **caractérisé en ce que**
la somme du premier temps de vol du son (t1) et du deuxième temps de vol du son (t2) est déterminée comme temps de vol totaL (Σt) et le rapport de mélange est déterminé à partir de la température (T) et du temps de vol total (Σt) au moyen d'une première table (21),
la différence du premier temps de vol du son (t1) et du deuxième temps de vol du son (t2) est déterminée comme temps de vol différentiel (Δt) et le débit (Y) est déterminé à partir du rapport de mélange, de la température (T) et du temps de vol différentiel (Δt) au moyen d'une deuxième table (22).
